# EUROPÄISCHE PATENTANMELDUNG

(11) **EP 3 593 679 A1**
(43) Veröffentlichungstag der Anmeldung: **15.01.2020**
(21) Anmeldenummer: 18182997.9
(22) Anmeldetag: 11.07.2018
(51) Int. Cl.: A47J 31/46, A47J 31/60, A47J 31/58

(54) **AUSLAUF, GETRÄNKEZUBEREITUNGSVORRICHTUNG UND VERFAHREN ZUM REINIGEN EINES AUSLAUFES EINER GETRÄNKEZUBEREITUNGSVORRICHTUNG**

(71) Anmelder: Delica AG, 4127 Birsfelden (CH)
(72) Erfinder: WÜTHRICH, Martin, 4417 Ziefen (CH); AFFOLTER, Roland, 5103 Möriken (CH); KELLER, Marco, 9325 Roggwil (CH); ZHANG, Jian, 518118 Shenzen (CN)
(74) Vertreter: Hepp Wenger Ryffel AG

(57) **Zusammenfassung**

Ein Auslauf (1) für eine Getränkezubereitungsvorrichtung zum Ausgeben einer Flüssigkeit umfasst eine Ausgabekammer (2) zur Aufnahme der auszugebenden Flüssigkeit, eine Eintrittsöffnung (3) zum Anschluss an eine Flüssigkeitszuführung, eine Auslauföffnung (4) zur Ausgabe der Flüssigkeit. Die Ausgabekammer (2) ist zwischen der Eintrittsöffnung (3) und der Auslauföffnung (4) angeordnet. Des Weiteren umfasst der Auslauf wenigstens einen Überlaufkanal (7), welcher die Ausgabekammer (2) zusätzlich nach aussen verbindet. Der Überlaufkanal (7) zweigt bei bestimmungsgemässem Gebrauch des Auslaufs (1) im Bereich eines höchsten Punktes (8) von der Ausgabekammer (1) ab.

## Beschreibung

Die vorliegende Erfindung betrifft einen Auslauf, eine Getränkezubereitungsvorrichtung und ein Verfahren zum Reinigen eines Auslaufes einer Getränkezubereitungsvorrichtung.

Aus dem Stand der Technik sind unterschiedliche Getränkezubereitungsvorrichtungen bekannt, welche allesamt einen Auslauf für das zubereitete Getränk aufweisen. Je nach Volumenstrom, welcher durch den Auslauf ausgegeben werden soll, ist der Auslauf unterschiedlich ausgestaltet.

Insbesondere bei der Zubereitung eines heissen Getränks, beispielsweise aus einer Portionenkapsel, kann das auszugebende Getränk einen hohen Luftanteil oder Dampfanteil aufweisen. Ausserdem ist der aus einer Kapsel austretende Flüssigkeitsstrom meist nicht sehr gleichmässig, so dass sich kein gleichmässiges Strahlbild ausbilden kann. Ein ungleichmässiges Strahlbild resultiert meist in unerwünschten Spritzern, welche die Umgebung des Auslaufes mit dem auszugebenden Getränk verschmutzen.

Die EP 2 565 151 A1 schlägt vor, den Auslauf mit einer Zwischenkammer zu versehen, welche zur Beruhigung der auszugebenden Flüssigkeitsströmung dient. Ausserdem weist die Zwischenkammer einen Verbindungskanal zur Aussenumgebung auf, welcher Dampfanteile aus der Flüssigkeit abführt. Nachteilig an dieser Zwischenkammer ist, dass insbesondere die bei der Zubereitung von milchhaltigen Getränken benötigte Reinigung nur schwer oder gar nicht möglich ist.

Es ist Aufgabe der Erfindung, die Nachteile des Standes der Technik zu überwinden. Insbesondere soll ein Auslauf für eine Getränkezubereitungsvorrichtung zur Verfügung gestellt werden, welcher das auszugebende Getränk in einem gleichmässigen Strahl ausgibt und leicht zu reinigen ist.

Diese Aufgabe wird durch die in den unabhängigen Patentansprüchen definierten Vorrichtungen und Verfahren gelöst. Weitere Ausführungsformen ergeben sich aus den abhängigen Patentansprüchen.

Ein erfindungsgemässer Auslauf für eine Getränkezubereitungsvorrichtung zum Ausgeben einer Flüssigkeit umfasst eine Ausgabekammer zur Aufnahme der auszugebenden Flüssigkeit, eine Eintrittsöffnung zum Anschluss an eine Flüssigkeitszuführung und eine Auslauföffnung zur Ausgabe der Flüssigkeit. Dabei ist die Ausgabekammer zwischen der Eintrittsöffnung und der Auslauföffnung angeordnet. Ausserdem weist der Auslauf wenigstens einen Überlaufkanal auf, welcher die Ausgabekammer zusätzlich nach aussen verbindet. Dieser Überlaufkanal zweigt bei bestimmungsgemässem Gebrauch des Auslaufs im Bereich eines höchsten Punktes von der Ausgabekammer ab.

Die Eintrittsöffnung kann bei bestimmungsgemässem Gebrauch des Auslaufs beispielsweise mit einer Brühkammer einer Getränkezubereitungsvorrichtung verbunden sein. Entsprechend wird sichergestellt, dass das zubereitete Getränk ohne weitere Beeinflussung, insbesondere mit einem möglichst geringen Temperaturverlust, zum Auslauf gelangt. Die Auslauföffnung ist dabei derart angeordnet, dass die auszugebende Flüssigkeit in einen Behälter, insbesondere eine Tasse oder ein Glas ausgegeben werden kann.

In der Ausgabekammer kann ein Dampfanteil des auszugebenden Getränks ausgeschieden werden und über den zusätzlichen Überlaufkanal nach aussen abgeleitet werden. Auch wenn von einer Brühkammer insbesondere zu Beginn oder während des Zubereitungsprozesses des Getränkes ein Luftanteil ausgegeben wird, kann dieser Luftanteil entweichen, ohne den Flüssigkeitsstrahl zu stören.

Durch die Anordnung der Abzweigung des Überlaufkanals im höchsten Punkt der Ausgabekammer kann sichergestellt werden, dass die Ausgabekammer beispielsweise bei einer Reinigung komplett mit einer Reinigungsflüssigkeit befüllt werden kann und die in der Ausgabekammer vorhandene Luft entweichen kann. Ausserdem ist es beispielsweise möglich, die Ausgabekammer über die Auslauföffnung zu spülen und das Spülmedium durch den Überlaufkanal auszutragen. Alternativ kann die Ausgabekammer auch über den Überlaufkanal befüllt und über die Auslauföffnung entleert werden. Ebenso ist es möglich, die Auslauföffnung zu verschliessen und die Ausgabekammer durch die Einlassöffnung direkt aus der Getränkezubereitungsvorrichtung zu spülen, wobei das Spülmedium über den Überlaufkanal abgeführt wird.

Vorzugsweise ist die Auslauföffnung bei bestimmungsgemässem Gebrauch am tiefsten Punkt der Ausgabekammer angeordnet. Somit verbleibt nach Gebrauch keine Restflüssigkeit in der Ausgabekammer.

Die Auslauföffnung kann über einen Auslaufkanal mit der Ausgabekammer verbunden sein. Durch die Verwendung eines Auslaufkanals kann die auszugebende Flüssigkeit weiter beeinflusst werden. So ist es beispielsweise möglich, einen Schaumanteil einer Flüssigkeit weiter zu homogenisieren. Ausserdem kann der Flüssigkeitsstrahl der auszugebenden Flüssigkeit geformt werden, so dass ein gleichmässiges Strahlbild ausgebildet wird.

Der Auslaufkanal kann eine wendelförmige Innengeometrie aufweisen. Durch eine wendelförmige Innengeometrie wird dem Flüssigkeitsstahl der auszugebenden Flüssigkeit ein Drall aufgezwungen, welcher zu einem gleichmässigeren Strahlbild führt.

Die wendelförmige Innengeometrie kann einen Gang, bevorzugt zwei oder drei, besonders bevorzugt vier oder mehr Gänge aufweisen. Durch die Anzahl der Gänge und durch die gewählte Steigung kann sowohl der Drall als auch die Auslaufgeschwindigkeit der auszugebenden Flüssigkeit beeinflusst werden.

Der Auslaufkanal kann auch einen oder mehrere, vorzugsweise gerade Führungsstege aufweisen. Ein solcher Führungssteg dient wiederum der Beruhigung des Strahlbildes.

Der Auslaufkanal kann in einem austauschbaren Auslaufelement angeordnet sein. Durch die austauschbare Anordnung ist eine einfachere Reinigung möglich. So kann beispielsweise das Auslaufelement entfernt und in einer herkömmlichen Spülmaschine gereinigt werden. Ebenso ermöglicht die Austauschbarkeit auch die nachträgliche Veränderung des Strahlbildes. Der Auslaufkanal kann an die Konsistenz der auszugebenden Flüssigkeit angepasst werden. Das Auslaufelement kann mittels einer Dichtung im Auslauf angeordnet sein. Die Dichtung kann gleichzeitig ein ungewolltes Lösen des Auslaufelementes verhindern.

Eine Querschnittsfläche der Eintrittsöffnung kann kleiner sein als eine Querschnittsfläche des Auslaufkanals. Durch die Ausgestaltung einer vergleichsweise kleinen Eintrittsöffnung kann beim Spülen die Menge der von der Auslaufklammer durch die Eintrittsöffnung zur Brühkammer gelangenden Spülflüssigkeit gering gehalten werden. Dies ist insbesondere dann vorteilhaft, wenn die Brühkammer nicht dicht abgeschlossen werden kann und allenfalls Schmutzpartikel und Spülflüssigkeit in eine vorgeschaltete Pumpe oder ein Heizelement gelangen kann.

Die Ausgabekammer kann ein Innenvolumen von 3 ml bis 40 ml, bevorzugt von 5 ml bis 20 ml und besonders bevorzugt von 7 ml bis 13 ml aufweisen. Dabei wird unter dem Innenvolumen der Ausgabekammer das Volumen der Kammer von der Einlassöffnung bis zur Auslauföffnung verstanden. Ein Volumen des Überlaufkanals wird hier nicht mitgerechnet. Das Innenvolumen der Ausgabekammer ist vorzugsweise derart berechnet, dass es bei der Getränkezubereitung ein Übermass von durch die Einlassöffnung einströmender Flüssigkeit gegenüber der durch die Auslauföffnung abfliessenden Flüssigkeit temporär aufnehmen kann. Bei bestimmungsgemässem Gebrauch des Auslaufes soll bewusst eine Flüssigkeitsmenge zwischengespeichert werden, so dass sich die auszugebende Flüssigkeit beruhigen kann und allfällige Dampf- und Luftanteile ausgeschieden werden können.

Der Überlaufkanal kann im Bereich der Auslauföffnung münden. Eine solche Anordnung reduziert die Gefahr für einen Benutzer, durch aus dem Überlaufkanal austretenden Dampf verbrüht zu werden. Ausserdem kann ein Benutzer erkennen, dass die Getränkezubereitungsmaschine nicht ordnungsgemäss arbeitet, wenn durch den Überlaufkanal Flüssigkeit austritt. Eine solche nicht ordnungsgemäss austretende Flüssigkeit wird bei entsprechender Anordnung nicht versprüht, sondern gelangt in das für die zubereitete Flüssigkeit bereitgestellte Gefäss. Entsprechend kommt es zu keiner Verschmutzung. Unter einem Bereich wird hier verstanden, dass die Auslassöffnung und die Mündung des Überlaufkanals lediglich durch wenige Millimeter voneinander beabstandet sind. Insbesondere sind die Zentren der Auslauföffnung und der Mündung des Überlaufkanals maximal 20 mm, bevorzugt maximal 15 mm, besonders bevorzugt maximal 10 mm, voneinander beabstandet. Ebenso ist es jedoch denkbar, dass der Überlaufkanal direkt in einen Schmutzwasserbehälter oder in die Abtropfschale der Getränkezubereitungsvorrichtung mündet. Hierzu kann beispielsweise ein Schlauch vorgesehen sein, welcher den Überlaufkanal zum Schmutzwasserbehälter oder der Abtropfschale leitet. Entsprechend kann die Gefahr des Verbrühens eines Benutzers nochmals verringert werden.

Eine Querschnittsfläche des Überlaufkanals kann grösser sein als eine Querschnittsfläche des Auslaufkanals. Eine solche Dimensionierung bewirkt, dass eine Flüssigkeitsausgabe durch den Überlaufkanal weniger gleichmässig erscheint als eine Ausgabe, welche durch den Auslaufkanal erfolgt. Ein Benutzer erkennt somit rasch eine fehlerhafte Zubereitung eines Getränkes.

Ein weiterer Aspekt der vorliegenden Erfindung betrifft eine Getränkezubereitungsvorrichtung umfassend einen Auslauf zum Ausgeben einer Flüssigkeit wie vorgängig beschrieben.

Die Getränkezubereitungsvorrichtung kann wenigstens zwei Betriebsmodi aufweisen, wobei ein erster Betriebsmodus zur Zubereitung eines Getränkes und ein zweiter Betriebsmodus der Reinigung des Auslaufes dienen. Dabei kann im zweiten Betriebsmodus eine Pumpe der Getränkezubereitungsvorrichtung eine Flüssigkeit mit einer Flussrate liefern, welche grösser ist als eine Flussrate im ersten Betriebsmodus. Diese Flussrate des zweiten Betriebsmodus ist derart gewählt, dass mehr Flüssigkeit in den Auslass eingefüllt wird, als was durch die Auslauföffnung des Auslasses austreten kann. Somit wird erreicht, dass die Ausgabekammer des Auslasses komplett befüllt werden kann. Beispielsweise kann die Flussrate zum Befüllen des Auslasses zwischen 4.5 ml/s bis 5.5 ml/s betragen. Für das Reinigen kann auch eine Flussrate grösser als 5.5 ml/s vorgesehen sein.

Ein weiterer Aspekt der vorliegenden Erfindung betrifft ein Verfahren zum Reinigen eines Auslaufes einer Getränkezubereitungsvorrichtung, insbesondere eines Auslaufs wie vorgängig beschrieben, umfassend die folgenden Schritte:
- Einbringen einer Flüssigkeit in den Auslauf durch eine Eintrittsöffnung,
- Befüllen eines eine Ausgabekammer bildenden Innenvolumens, welches zwischen der Eintrittsöffnung und einer Auslauföffnung des Auslaufs angeordnet ist, mit der Flüssigkeit,
- Verschliessen der Ausgabekammer,
- Abführen der Flüssigkeit aus der Ausgabekammer durch die Auslauföffnung und/oder durch einen Überlaufkanal.

Durch ein Verschliessen der Ausgabekammer kann sichergestellt werden, dass einmal eingefüllt eine für die Reinigung vorgesehene Flüssigkeit in der Ausgabekammer verweilen kann. Durch die Wahl einer entsprechenden Reinigungsflüssigkeit können auch hartnäckige Verschmutzungen gelöst und anschliessend ausgespült werden. Insbesondere bei der Zubereitung von milchhaltigen Produkten ist eine intensive Reinigung des Auslaufs zwingend nötig. Nach dem Verweilen der Reinigungsflüssigkeit kann die Ausgabekammer wieder geöffnet werden, so dass Luft einströmen kann und die Reinigungsflüssigkeit abgeführt wird.

Vorzugsweise wird die Ausgabekammer luftdicht verschlossen durch je eine stehende Säule der Flüssigkeit, welche sowohl den Auslaufkanal als auch den Überlaufkanal abdichtet. Eine solche stehende Flüssigkeitssäule kommt dann zu Stande, wenn die Kohäsionskräfte der Flüssigkeit grösser sind als die Adhäsionskräfte (d.h. die Kapillarwirkung) zwischen der Flüssigkeit und der Umgebung.

Eingangsseitig kann die Ausgabekammer dicht mit einer Brühkammer der Getränkezubereitungsvorrichtung verbunden sein. Wenn auch die Brühkammer dicht verschlossen werden kann, sind keine zusätzlichen Hilfsmittel zum luftdichten Verschliessen der Ausgabekammer mehr nötig. Vorzugsweise ist die Brühkammer der Getränkezubereitungsvorrichtung auch ohne eine in die Brühkammer eingesetzte Kapsel dicht, so dass ein luftdichtes Verschliessen einfach möglich wird. Selbst wenn nicht die gesamte Luft aus der Ausgabekammer beim Befüllen mit der Flüssigkeit verdrängt wurde, bleibt die Ausgabekammer luftdicht verschlossen und ein Unterdruck wird erzeugt.

Die für die Reinigung verwendete Flüssigkeit kann wenigstens 10 s, bevorzugt wenigstens 20 s, besonders bevorzugt wenigstens 30 s in der Ausgabekammer belassen werden. Je nach Reinigungsflüssigkeit und Verschmutzungsgrad empfiehlt sich eine andere Verweilzeit. Es ist jedoch auch denkbar, dass die Flüssigkeit länger als 30 s, beispielsweise wenigstens 180 s, bevorzugt wenigstens 3 h, besonders bevorzugt bis zu 12 h, insbesondere über Nacht, in der Ausgabekammer belassen wird.

Die Flüssigkeit kann eine Reinigungsflüssigkeit, beispielsweise Spülwasser, Reinigungsmittel, Entkalkungsmittel, usw. sein. Beispielshafte Reinigungsmittel können Tenside, Phosphate, Amidosulfonsäure, Orthophosphorsäue, Sulfamidsäure oder Ameisensäure umfassen.

Zum Verschliessen der Ausgabekammer kann ein Verschlusszapfen in die Auslauföffnung eingesetzt werden. Insbesondere wenn die Ausgabekammer ausgespült werden soll oder wenn ein luftdichtes Verschliessen der Einlassöffnung nicht möglich ist, ermöglicht ein solcher Verschlusszapfen trotzdem, die Ausgabekammer zu verschliessen und die Flüssigkeit einwirken zu lassen. Dieser Verschlusszapfen kommt vorzugsweise bei älteren Maschinen zum Einsatz, da vielfach bei diesen ein dichtes Verschliessen der Bühlkammer ohne eingelegte Kapsel nicht gewährleistet werden kann.

Der Verschlusszapfen kann eine Bürste umfassen, mittels welcher beim Einsetzen des Verschlusszapfens in die Auslauföffnung die Auslauföffnung und/oder ein Auslaufkanal mechanisch gereinigt werden. Eine solche Bürste ist vor allem bei der Reinigung von starken Verschmutzungen vorteilhaft.

Anhand von Figuren, welche lediglich Ausführungsbeispiele darstellen, wird die Erfindung im Folgenden näher erläutert. Es zeigen:
- Figur 1:: in einer perspektivischen Darstellung eine Brühvorrichtung einer Getränkezubereitungsvorrichtung mit einem erfindungsgemässen Auslauf,
- Figur 2:: einen Querschnitt durch den erfindungsgemässen Auslauf der Brühvorrichtung gemäss Figur 1,
- Figur 3:: einen Querschnitt durch eine weitere Ausführungsform eines erfindungsgemässen Auslaufs,
- Figur 4a:: in einer perspektivischen Darstellung den Auslauf aus Figur 3,
- Figur 4b:: einen Querschnitt durch eine erste Ausführungsform eines Auslaufkanals des Auslaufs gemäss Figur 4a,
- Figur 4c:: einen Querschnitt durch eine zweite Ausführungsform eines Auslaufkanals des Auslaufs gemäss Figur 4a,
- Figur 5:: einen Querschnitt durch eine weitere Ausführungsform eines erfindungsgemässen Auslaufs,
- Figuren 6a-6c:: je eine perspektivische Darstellung des Auslaufs gemäss Figur 5 mit einem Reinigungswerkzeug in unterschiedlichen Reinigungspositionen,
- Figur 7:: einen Querschnitt durch eine Brühvorrichtung einer Getränkezubereitungsvorrichtung mit einem Auslauf gemäss Figur 5.

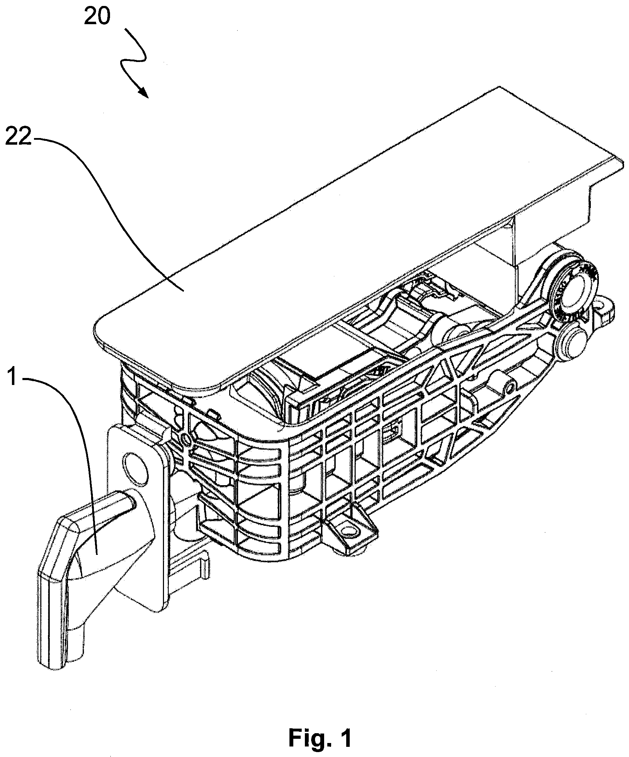

Figur 1 zeigt in einer perspektivischen Darstellung eine Brühvorrichtung 20 einer Getränkezubereitungsvorrichtung. Die Brühvorrichtung 20 ist mit einem erfindungsgemässen Auslauf 1 versehen. Weiter zu erkennen ist ein Hebel 22, welcher zum Betätigen der Brühvorrichtung 20 bzw. zum Öffnen und Schliessen einer Kapselaufnahme der Brühvorrichtung 20 dient.

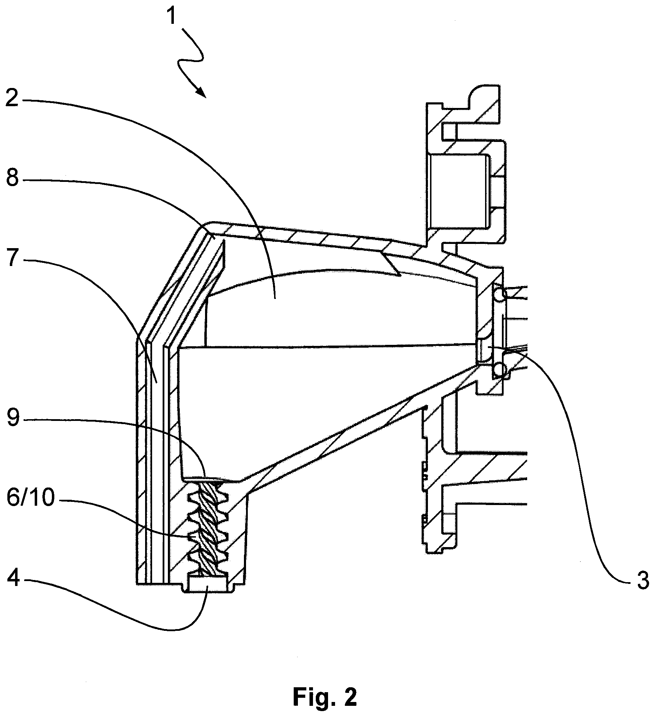

In Figur 2 ist ein Querschnitt durch den erfindungsgemässen Auslauf 1 der Brühvorrichtung 20 gemäss Figur 1 dargestellt. Der Auslauf 1 weist eine grosse Ausgabekammer 2 mit einer Eintrittsöffnung 3 und einer Auslassöffnung 4 auf. Die Auslassöffnung 4 ist dabei im tiefsten Punkt 9 der Ausgabekammer 2 angeordnet und verfügt über einen Auslaufkanal 6 mit einer wendelförmigen Innengeometrie 10. Parallel zum Auslaufkanal 6 ist ein Überlaufkanal 7 angeordnet, welcher im höchsten Punkt 8 der Ausgabekammer 2 abzweigt. Bei bestimmungsgemässen Gebrauch ist der Auslauf 1 dicht an eine Brühvorrichtung 20 (siehe Figur 1) angeschlossen.

Die Eintrittsöffnung 3 ist dabei dicht mit einer Austrittsöffnung einer Kapselaufnahme der Brühvorrichtung verbunden.

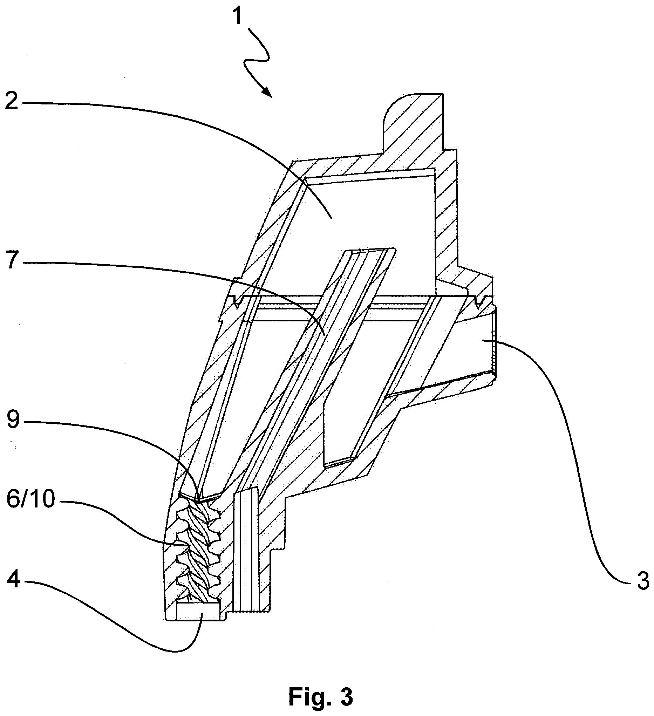

Die Figur 3 zeigt einen Querschnitt durch eine weitere Ausführungsform eines erfindungsgemässen Auslaufs 1. Wiederum ersichtlich ist die Ausgabekammer 2, welche über eine Eintrittsöffnung 3 befüllt werden kann. Im tiefsten Punkt 9 der Ausgabekammer 2 ist ein Auslaufkanal 6 mit wendelförmiger Innengeometrie 10 angeordnet, welcher in einer Auslauföffnung 4 mündet. Parallel zum Auslaufkanal 6 ist ein Überlaufkanal 7 angeordnet, welcher mit einem rohrförmigen Gebilde bis in einen oberen Bereich der Ausgabekammer 2 reicht.

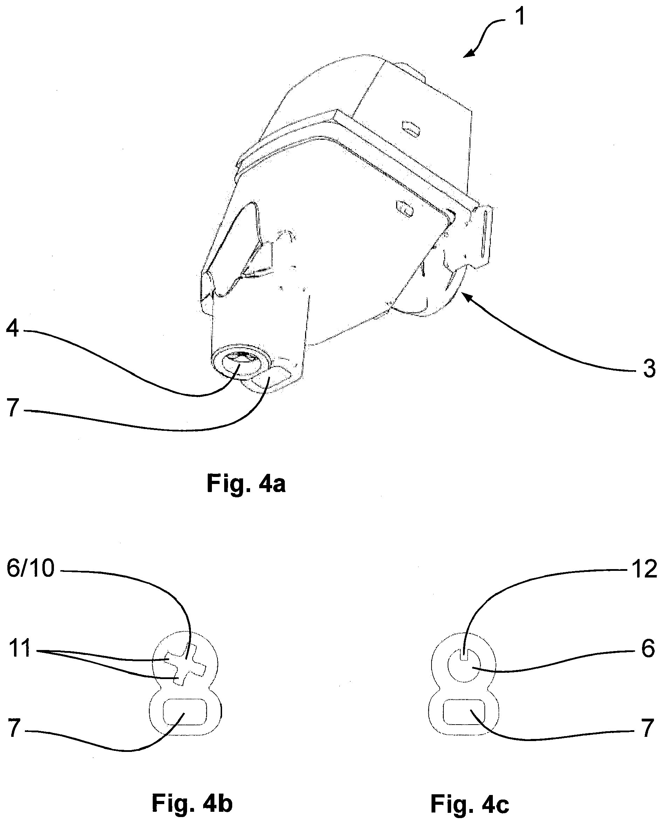

Figur 4a zeigt in einer perspektivischen Darstellung den Auslauf 1 aus Figur 3. Insbesondere erkennbar ist die Auslauföffnung 4, welcher neben einer Mündung des Überlaufkanals 7 angeordnet ist. Ebenfalls angedeutet ist die Position der Eintrittsöffnung, durch welche der Auslauf 1 mit einer Flüssigkeit versorgt werden kann.

Die Figuren 4b und 4c zeigen je einen Querschnitt durch zwei unterschiedliche Ausführungsformen eines Auslaufkanals 6 des Auslaufs 1 gemäss der Figur 4a. In der Figur 4b ist Auslaufkanal 6 in einem Querschnitt als Kreuz dargestellt, da er über eine wendelförmige Innengeometrie 10 verfügt. Jeder Seitenarm des Kreuzes stellt dabei einen separaten Gang 11 der wendelförmigen Innengeometrie 10 (siehe auch Figur 3) dar. Der Überlaufkanal 7 ist in unmittelbarer Nähe zum Auslaufkanal angeordnet. In der Figur 4c weist der Auslaufkanal 6 eine mehrheitlich kreisrunde Innengeometrie auf. Lediglich ein Führungssteg 12 ist in Längsrichtung des Auslaufkanals im Auslaufkanal 6 angeordnet. Wiederum ist der Überlaufkanal 7 parallel zum Auslaufkanal 6 angeordnet.

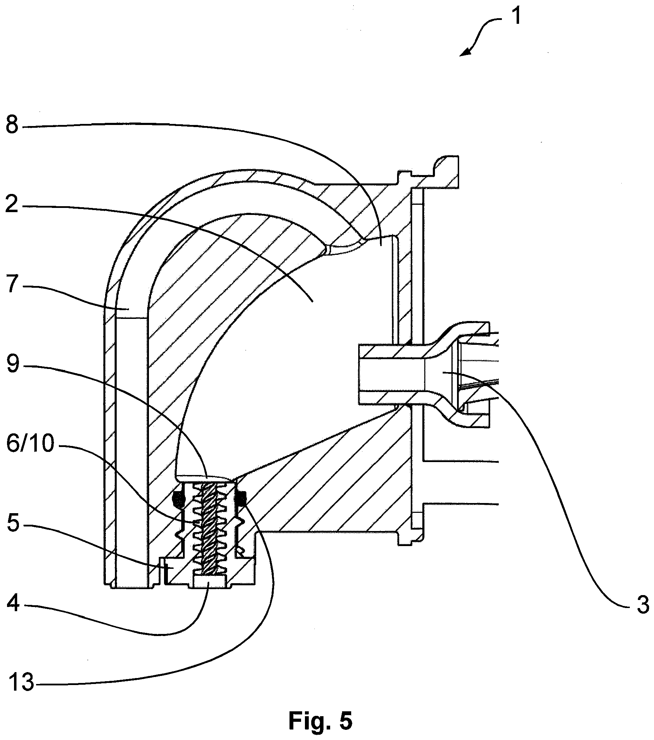

Die Figur 5 zeigt einen Querschnitt durch eine weitere Ausführungsform eines erfindungsgemässen Auslaufs 1. Durch eine Eintrittsöffnung 3 kann die Ausgabekammer 2 befüllt werden. Am tiefsten Punkt 9 der Ausgabekammer 2 ist ein Auslaufkanal 6 mit wendelförmiger Innengeometrie 10 angeordnet. Dieser Auslaufkanal 6 mündet in einer Auslauföffnung 4. Im Gegensatz zu den vorab gezeigten Ausführungsformen ist bei diesem Auslauf 1 der Auslaufkanal 6 und die Auslauföffnung 4 in einem separaten und austauschbaren Auslaufelement 5 angeordnet. Das Auslaufelement 5 ist in den Auslauf 1 eingeschraubt und verfügt über eine Dichtung 13, welche gleichzeitig als Sicherung gegen ein unbeabsichtigtes Lösen dient. Mittels unterschiedlicher Auslaufelemente 5 kann eine einfache Anpassung an das auszugebende Getränk realisiert werden. Wiederum zweigt im höchsten Punkt 8 der Ausgabekammer 2 der Überlaufkanal 7 ab.

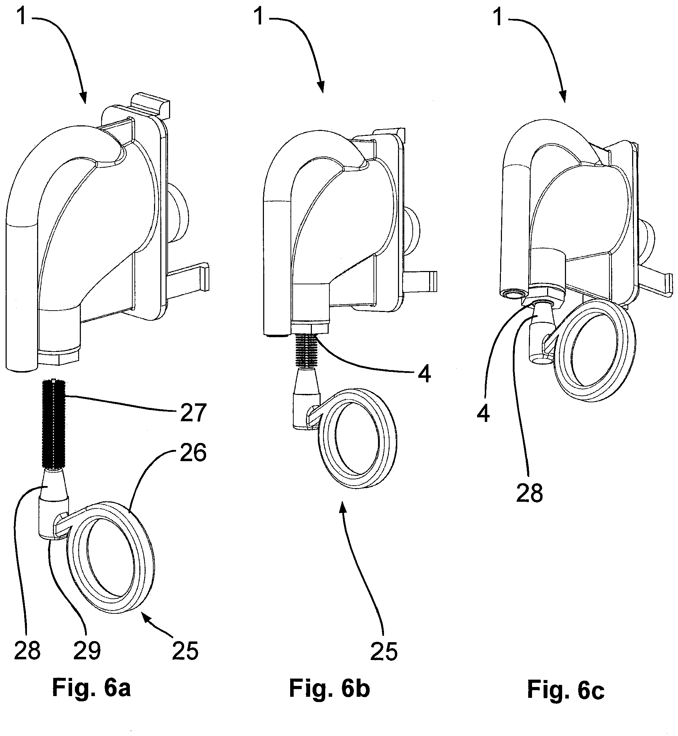

Die Figuren 6a bis 6c zeigen je eine perspektivische Darstellung des Auslaufs 1 gemäss der Figur 5 mit einem Reinigungswerkzeug 25 in unterschiedlichen Reinigungspositionen. Dieses Reinigungswerkzeug 25 weist einen Verschlusszapfen 28 und eine daran angeordnete Bürste 27 auf. Des Weiteren verfügt das Reinigungswerkzeug 25 über einen Griff 26 sowie eine Tropfnase 29. Bei bestimmungsgemässen Gebrauch bildet die Tropfnase für eine Flüssigkeit, welche entlang der Bürste 27 und dem Verschlusszapfen 28 abtropft, einen tiefsten Punkt, an dem sich die Flüssigkeit sammelt und dann weiter abtropft. Ein Benutzer, welcher das Reinigungswerkzeug 25 am Griff 26 hält, kommt so nicht in Kontakt mit dieser Flüssigkeit. Wie in Figur 6b dargestellt, kann das Reinigungswerkzeug 25 in die Auslauföffnung 4 des Auslaufs 1 eingesteckt werden. Dabei wird die Bürste 27 in die Auslauföffnung 4 eingeführt, so dass der Auslaufkanal 6 (siehe Figur 5) mechanisch gereinigt werden kann. Bei komplettem Einstecken des Reinigungswerkzeugs 25 in die Auslauföffnung 4 des Auslaufs 1 dichtet der Verschlusszapfen 28 die Auslauföffnung 4 komplett ab. Dies ist in Figur 6c dargestellt. In diesem Zustand kann beispielsweise eine Flüssigkeit von der Brühvorrichtung 20 (siehe Figur 1) in den Auslauf 1 eingespritzt werden, so dass die Ausgabekammer 2 (siehe Figur 5) komplett befüllt werden kann. Sobald die Ausgabekammer 2 komplett befüllt ist, kann über den Überlaufkanal 7 (siehe Figur 5) die Flüssigkeit aus dem Auslauf 1 austreten, die Ausgabekammer 2 kann somit gespült werden. Ebenso kann die Spülflüssigkeit eine gewisse Zeit im Auslauf 1 belassen werden, so dass sich hartnäckige Verschmutzungen lösen können. Sobald das Reinigungswerkzeug 25 wieder aus der Auslauföffnung 4 entfernt wurde, kann auch der Auslaufkanal 6 (siehe Figur 5) gespült und die Spülflüssigkeit ausgetragen werden.

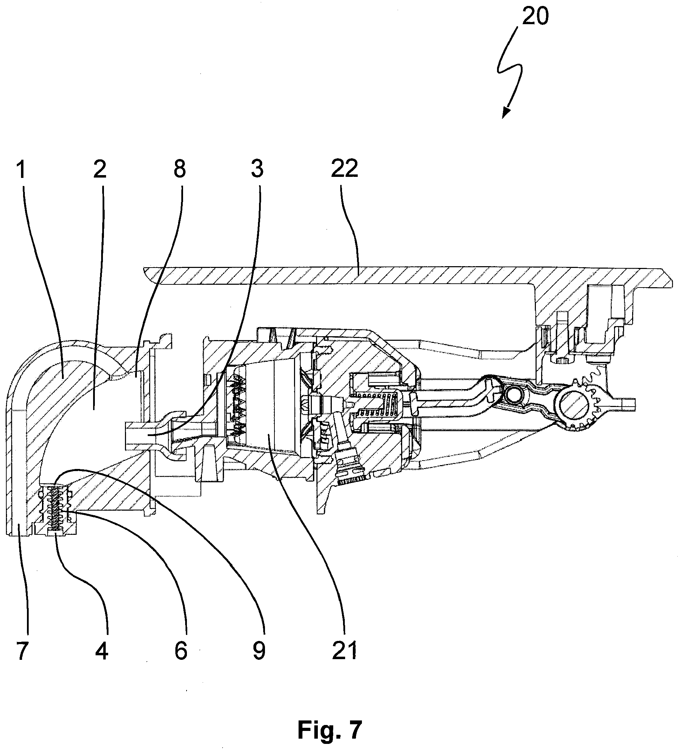

Die Figur 7 zeigt einen Querschnitt durch eine Brühvorrichtung 20 einer Getränkezubereitungsvorrichtung mit einem erfindungsgemässen Auslauf 1 gemäss der Figur 5. Die Brühvorrichtung 20 kann mit dem Hebel 22 geöffnet werden, so dass eine Kapselaufnahme 21 zur Aufnahme einer entsprechenden Kapsel zur Zubereitung eines Getränks vorbereitet ist. Beim Verschliessen der Brühvorrichtung 20 bzw. beim Hinunterdrücken des Hebels 22 in die dargestellte Position, wird eine Kapsel, welche sich in der Kapselaufnahme 21 befindet, dicht eingeschlossen. Bekannterweise kann nun die Kapsel penetriert und mit üblicherweise heissem Wasser beaufschlagt werden. Der Bodenbereich der Kapsel wird ebenfalls penetriert, so dass das aus der Kapsel extrahierte Getränk aus der Brühvorrichtung 20 in Richtung zum Auslauf 1 fliesst. Durch die Eintrittsöffnung 3, welche dicht mit der Kapselaufnahme 21 verbunden ist, gelangt das zubereitete Getränk in die Ausgabekammer 2. Je nach Art des zubereiteten Getränks und der Strömungsgeschwindigkeit dieses Getränks wird sich die Ausgabekammer 2 mehr oder weniger füllen. Dabei spielt die Viskosität des zubereiteten Getränks eine wesentliche Rolle. Getränke mit einer höheren Viskosität werden sich langsamer durch den Auslaufkanal 6 bewegen als Getränke mit einer tieferen Viskosität. Entsprechend wird sich die Ausgabekammer 2 mehr oder weniger füllen. Das Getränk kann sich in dieser Ausgabekammer 2 beruhigen und am tiefsten Punkt 9 durch den Auslaufkanal 6 zur Auslauföffnung 4 gelangen. In der Ausgabekammer 2 können beispielsweise Dampfanteile des Getränks ausgeschieden werden, welche sich über einen Überlaufkanal 7 entladen können. Dieser Überlaufkanal 7 zweigt am höchsten Punkt 8 aus der Ausgabekammer 2 ab.

Das Innenvolumen der Ausgabekammer beträgt ca. 10 ml und ist so ausgelegt, dass bei normalen Flüssigkeitsströmungen aus einer Kapsel ein Rückstau des Getränks in der Ausgabekammer 2 aufgenommen werden kann. Durch diesen Rückstau wird erreicht, dass sich keine Lufteinschlüsse im Auslaufstrahl einbinden können. Entsprechend wird sich eine hohe Qualität eines Auslaufstrahls einstellen, ohne dass unnötige Spritzer auftreten.

Bei der Zubereitung von Kaffee und Tee bildet sich lediglich ein geringer Rückstau. Üblicherweise kann ein solcher Rückstau durch normales Spülen mit Wasser ebenfalls erreicht werden. Entsprechend kann nach einer Kaffee- oder Teezubereitung und durch ein kurzes Spülen die jeweiligen Rückstände aus der Ausgabekammer ausgespült werden. Bei der Zubereitung von milchhaltigen Getränken, welche üblicherweise aufschäumen, wird ein höheres Rückstauniveau erreicht. Kurzzeitig auftretende Überdrücke können, wie bereits erwähnt, über den Überlaufkanal 7 abgeleitet werden. Entsprechend tritt zum Auslaufkanal 6 ein geglätteter Auslaufstrahl aus. Um nach einer Zubereitung von milchhaltigen Getränken die Auslaufkammer 2 zu reinigen, wird ein Spülen mit erhöhter Spülwassermenge und erhöhter Flussrate durchgeführt. Durch eine erhöhte Flussrate kann das Wasser beim Spülen mindestens das Rückstauniveau der milchhaltigen Getränke erreichen. Vorzugsweise wird jedoch die gesamte Ausgabekammer 2 geflutet, bis Spülwasser sowohl aus dem Überlaufkanal 7 als auch aus dem Ablaufkanal 6 austritt. Wenn nun die Ausgabekammer 2 dicht verschlossen wird, kann sich das Spülwasser nicht aus der Ausgabekammer 2 entleeren. Eine entsprechend dem Spülwasser beigegebene Reinigungsflüssigkeit kann einwirken und Rückständer der Getränkezubereitung lösen. Das dichte Verschliessen kann durch je eine stehende Säule des Spülwasser im Auslaufkanal 6 und im Überlaufkanal 7 erfolgen. Alternativ kann mittels des Verschlusszapfen 28 die Auslauföffnung verschlossen werden. Ein erneuter Schritt des Spülens schwemmt auch die letzten Rückstände aus der Ausgabekammer aus. Sobald wieder Luft beispielsweise durch die Eintrittsöffnung 3 in die Ausgabekammer 2 geleitet wird, kann sich die Ausgabekammer 2 komplett entleeren.

## Patentansprüche

1. Auslauf (1) für eine Getränkezubereitungsvorrichtung zum Ausgeben einer Flüssigkeit, umfassend eine Ausgabekammer (2) zur Aufnahme der auszugebenden Flüssigkeit, eine Eintrittsöffnung (3) zum Anschluss an eine Flüssigkeitszuführung, eine Auslauföffnung (4) zur Ausgabe der Flüssigkeit, wobei die Ausgabekammer (2) zwischen der Eintrittsöffnung (3) und der Auslauföffnung (4) angeordnet ist, und wenigstens einen Überlaufkanal (7), welcher die Ausgabekammer (2) zusätzlich nach aussen verbindet, **dadurch gekennzeichnet, dass** der Überlaufkanal (7) bei bestimmungsgemässem Gebrauch des Auslaufs (1) in einem Bereich eines höchsten Punktes (8) von der Ausgabekammer (2) abzweigt.

2. Auslauf (1) nach Anspruch 1, wobei die Auslauföffnung (4) über einen Auslaufkanal (6) mit der Ausgabekammer (2) verbunden ist.

3. Auslauf (1) nach Anspruch 1 oder 2, wobei der Auslaufkanal (6) eine wendelförmige Innengeometrie (10) aufweist.

4. Auslauf (1) nach Anspruch 3, wobei die wendelförmige Innengeometrie (10) einen Gang (11), bevorzugt zwei oder drei, besonders bevorzugt vier oder mehr Gänge (11) aufweist.

5. Auslauf (1) nach Anspruch 1 oder 2, wobei der Auslaufkanal (6) einen oder mehrere vorzugsweise gerade Führungsstege (12) aufweist.

6. Auslauf (1) nach einem der vorhergehenden Ansprüche, wobei der Auslaufkanal (6) in einem austauschbaren Auslaufelement (5) angeordnet ist.

7. Auslauf (1) nach einem der vorhergehenden Ansprüche, wobei eine Querschnittsfläche der Eintrittsöffnung (3) kleiner ist als eine Querschnittsfläche des Auslaufkanals (6).

8. Auslauf (1) nach einem der vorhergehenden Ansprüche, wobei die Ausgabekammer (2) ein Innenvolumen von 3 ml bis 40 ml, bevorzugt von 5 ml bis 20 ml und besonders bevorzugt von 7 ml bis 13 ml aufweist.

9. Auslauf (1) nach einem der vorhergehenden Ansprüche, wobei der Überlaufkanal (7) im Bereich der Auslauföffnung (4) mündet.

10. Auslauf (1) nach einem der vorhergehenden Ansprüche, wobei eine Querschnittsfläche des Überlaufkanals (7) grösser ist als eine Querschnittsfläche des Auslaufkanals (6).

11. Getränkezubereitungsvorrichtung umfassend einen Auslauf (1) zum Ausgeben einer Flüssigkeit nach einem der Ansprüche 1 bis 10.

12. Verfahren zum Reinigen eines Auslaufes (1) einer Getränkezubereitungsvorrichtung, insbesondere eines Auslaufs (1) nach einem der Ansprüche 1 bis 10, umfassend die Schritte
- Einbringen einer Flüssigkeit in den Auslauf (1) durch eine Eintrittsöffnung (3),
- Befüllen eines eine Ausgabekammer (2) bildenden Innenvolumens, welches zwischen der Eintrittsöffnung (3) und einer Auslauföffnung (4) des Auslaufs (1) angeordnet ist, mit der Flüssigkeit,
- Verschliessen der Ausgabekammer (2),
- Abführen der Flüssigkeit durch die Auslauföffnung (4) und/oder einen Überlaufkanal (7).

13. Verfahren nach Anspruch 12, wobei die Flüssigkeit eine Reinigungsflüssigkeit ist.

14. Verfahren nach Anspruch 12 oder 13, wobei die Ausgabekammer (2) luftdicht verschlossen wird durch je eine stehende Säule der Flüssigkeit im Auslaufkanal (6) und im Überlaufkanal (7).

15. Verfahren nach Anspruch 12 oder 13, wobei zum Verschliessen der Ausgabekammer (2) ein Verschlusszapfen (28) in die Auslauföffnung (4) eingesetzt wird.

16. Verfahren nach Anspruch 15, wobei der Verschlusszapfen (28) eine Bürste (27) umfasst, mittels welcher beim Einsetzen die Auslauföffnung (4) und/oder der Auslaufkanal (6) mechanisch gereinigt werden.
